# EUROPEAN PATENT SPECIFICATION

(11) **EP 2 735 755 B1**
(45) Date of publication and mention of the grant of the patent: **08.08.2018**
(21) Application number: 12815323.6
(22) Date of filing: 24.05.2012
(51) Int. Cl.: F16F 1/32, B24C 1/10, F16F 1/02

(54) **DISC SPRING AND PRODUCTION METHOD THEREFOR**
TELLERFEDER UND HERSTELLUNGSVERFAHREN DAFÜR
RESSORT DISQUE ET PROCÉDÉ DE FABRICATION DE CE RESSORT

(30) Priority: 19.07.2011 JP 2011157818
(43) Date of publication of application: 28.05.2014
(73) Proprietor: NHK Spring Co.,Ltd., Yokohama-shi Kanagawa 236-0004 (JP)
(72) Inventor: HARADA, Takafumi, Isehara-shi Kanagawa 259-1126 (JP)
(74) Representative: Eisenführ Speiser
(86) International application number: PCT/JP2012/063282
(87) International publication number: WO 2013/011737

(56) References cited:
- JP-A- 11 351 297
- JP-A- 2000 027 915
- JP-A- 2000 027 915
- JP-U- S5 141 054
- JP-U- S5 534 567
- JP-U- 51 041 054
- JP-U- 55 034 567

## Description

### Technical Field

The present invention relates to a disc spring in which residual stress is applied by shot peening and a production method therefor. In particular, the present invention relates to an improvement in the precision of the disc spring.

### Background Art

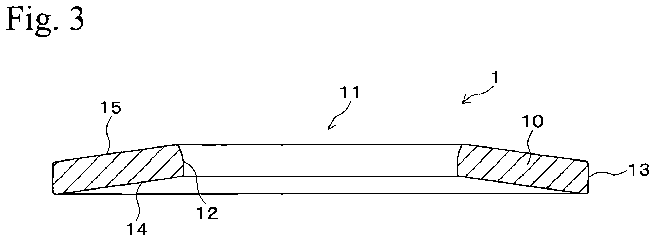

A disc spring is used in various applications, such as a biasing means, a shock mitigating member, etc., in fields of industrial machines, automobiles, and the like. Fig. 3 is a cross-sectional view in an axial direction showing a structure of a disc spring. The disc spring 1 has a main body 10 in a disc shape, and a hole 11 is formed at the center portion of the main body 10. An inside diameter portion 12 which is an inner circumferential surface of the hole 11 has a bending surface in which the cross-sectional view in an axial direction is bent. An outside diameter portion 13 has a parallel surface to the axial direction.
The disc spring 1 can be elastically deformed, so as to lower the axial direction. A concave side of the disc spring 1 (a lower side of the figure) has a tensile surface 14 in which tensile stress is generated in an elastic deformation, and a convex side of the disc spring 1 (an upper side of the figure) has a compressive surface 15 in which compressive stress is generated in an elastic deformation.

For example, when the disc spring is used in a machining center, it is used as a biasing means to carry out a holding operation for a tool holder, (for example, Patent Document 1). Specifically, a main shaft device of the machining center has a drawbar that extends in an axial direction, a collet for holding the tool holder is provided at a front end of the drawbar, and an oil hydraulic cylinder for moving the drawbar along an axial direction is provided at a rear end of the drawbar.

Multiple disc springs are placed between stoppers at both ends of the drawbar, and the hole of the disc spring is penetrated by the drawbar. In this case, the drawbar functions as a guide shaft of the disc spring. For example, in the main shaft device, the drawbar is biased backward by the disc spring and retreats, and as a result, the collet holds a pull stud at the rear end of the tool holder. On the other hand, the drawbar advances against a bias force of the disc spring by the oil hydraulic cylinder, and as a result, the collet cancels holding the pull stud of the tool holder. In the disc spring in the Patent Document 1, the concave portion is formed at an edge of the inside diameter portion of the disc spring, in order to prevent malfunction due to abrasive dust, etc., generated in the sliding of the disc spring and the drawbar.

Patent Document 1 is Japanese Patent Publication No. 4250645. JP 2000 027915 A relates to the manufacturing method of a disk spring.

### SUMMARY OF THE INVENTION

### PROBLEMS SOLVED BY THE INVENTION

In the production of the disc spring, machining is carried out on an inside diameter portion and an outside diameter portion of a blank in a disc shape, and then, shot peening is carried out on the blank. When the disc spring is used in a machining center, high precision is required in the disc spring, and therefore, for example, in order to prevent the inside diameter of the disc spring from changing as it slides with a guide shaft, the inside diameter portion has a bending surface (an R surface) in the above machining to the inside diameter portion of the blank. In addition, an inside diameter portion side edge of a tensile surface, in which tensile stress is generated in elastic deformation of the disc spring, is a portion in which the maximum stress can be generated, and as a result, in the above shot peening, it is important that the residual stress be applied to the inside diameter portion side edge in the tensile surface in which in particular, the maximum stress can be generated.

However, in the production of the disc spring, since shot peening is carried out after machining the inside diameter portion as described above, there is a problem that roughness due to the shot is formed on the inside diameter portion and the inside diameter portion is substantially deformed. Therefore, it is difficult to control the inside diameter tolerance so as to have a maximum range of about 10 µm, and an attempt cannot be made to impart high precision. Then, it is considered that machining of the inside diameter portion is carried out after shot peening by changing the processing order of the machining to the inside diameter portion and the shot peening. However, in this case, when the machining is carried out in order to form the inside diameter portion having a bending surface, the inside diameter portion side edge of the tensile surface in which the residual stress is applied by the shot peening is easily removed, and there is a problem that the residual stress does not remain on the inside diameter portion side edge of the tensile surface after machining.

Therefore, an object of the present invention is to provide a disc spring and a production method therefor in which an attempt can be made to improve precision of an inside diameter portion, and in which residual stress can be applied to the inside diameter portion side edge of a tensile surface.

### MEANS FOR SOLVING THE PROBLEMS

The disc spring of the present is defined in claim 1, and includes a main body in a disc shape having a hole, wherein a chamfered portion is formed at an inside diameter portion side edge of a tensile surface in the main body, residual stress generated by shot peening is applied to at least the tensile surface, and an inside diameter portion is a machined surface.

In the disc spring of the present invention, a chamfered potion formed at the inside diameter portion side edge on the tensile surface of the main body has residual stress, since the residual stress due to the shot peening is applied to at least the tensile surface and the chamfered portion.

Thus, the inside diameter portion side edge of the tensile surface in which the maximum stress can be generated has residual stress, and as a result, an attempt can be made to improve durability. In addition, since the inside diameter portion is a machined surface, there is no effect due to a form, such as roughness generated by the shot peening and surface roughness can be set to be low. As described above, an attempt can be made to impart high precision to the inside diameter portion, and consequently, when the disc spring is used in a device having a guide shaft and the guide shaft is provided in a hole of the disc spring, clearance between the inside diameter portion and the guide shaft can be set to have high precision and an attempt can be made to improve sliding with the guide shaft.

The inside diameter portion is a bending surface in which a cross section in an axial direction has an arc shape. In this aspect, since the bending surface can have a given curvature radius, change of an inside diameter of the disc spring can be suppressed when a guide shaft is provided in a hole and the main body is slid with the guide shaft by elastic deformation. The disc spring of the present invention can be used in various structures. For example, a compressive surface side edge of the chamfered portion may be formed, so as to be located toward the tensile surface from a peak of the bending surface. The peak of the bending surface is a point showing an inside diameter of the disc spring, and in this case, the change of the inside diameter can be effectively suppressed when the main body is slid with the guide shaft by elastic deformation. Furthermore, for example, the chamfered portion is a bending surface in which a cross section in an axial direction is an arc shape or a slope in which an angle for a flat portion of the tensile surface is a given value. In particular, in the case in which the chamfered surface is a slope in which an angle for a flat portion of the tensile surface is a given value, a processing edge is easily found and the processing is easily managed.

The production method for the disc spring of the present invention is defined in claim 4 and includes a preparing step in which a blank in a disc shape having a hole is prepared, a forming step in which a chamfered portion is formed by chamfering at an inside diameter portion side edge of a tensile surface in the blank, a shot peening step in which at least the tensile surface and the chamfered portion in the blank is shot peened after the chamfering, and a machining step in which the inside diameter is machined after the shot peening.

In the production method for a disc spring of the present invention, the shot peening is carried out on at least the tensile surface after a chamfered portion is formed at an inside diameter portion side edge of the tensile surface in the blank, and therefore, residual stress can be applied to the chamfered portion of the inside diameter portion side edge of the tensile surface. Since the machining is carried out on the inside diameter portion after the shot peening, since at least an outside diameter portion side of the chamfered portion remains, the remaining chamfered portion can constitute the inside diameter portion side edge of the tensile surface after the machining. Therefore, the inside diameter portion side edge of the tensile surface in which the maximum stress can be generated has residual stress, and as a result, an attempt can be made to improve durability. In addition, since the machining is carried out on the inside diameter portion after the shot peening, the inside diameter can be easily managed. In this case, an effect due to a form, such as roughness generated by shot peening, can be removed, and therefore, an attempt can be made to improve the precision of the inside diameter portion. Thus, the clearance between the inside diameter portion and the guide shaft can be set to have high precision. After the machining, a step for changing the inside diameter is not necessary, and consequently, an attempt can be made to further improve the precision of the inside diameter portion and, for example, an inside diameter tolerance of the maximum range of about 5 µm can be controlled. Thus, the above clearance can be set to have higher precision.

According to the disc spring or the production method therefor of the present invention, an attempt can be made to improve the precision of an inside diameter portion, and residual stress can be applied to the inside diameter portion side edge of a tensile surface.

### BRIEF DESCRIPTION OF DRAWINGS

Fig. 1 is a cross sectional view in an axial direction showing a structure of a disc spring according to an embodiment of the present invention.
Figs. 2A to 2D are figures for explaining each step in a production method of a disc spring according to an embodiment of the present invention, and are cross sectional views in an axial direction showing structures of a right portion of a blank.
Fig. 3 is a cross sectional view in an axial direction showing a conventional disc spring.

### EXPLANATION OF REFERENCE NUMERALS

Reference numeral 100 denotes a disc spring, 100A denotes a blank, 110 denotes a main body, 111 denotes a hole portion, 112 and 112A denote inside diameter portions, 113 and 113A denote outside diameter portions, 114 and 114A denote tensile surfaces, 115 and 115A denote compressive surfaces, 121 and 121A denote chamfering surfaces, reference letter α denotes an angle (a given angle), and P denotes a peak.

### DESCRIPTION OF THE PREFERRED EMBODIMENTS

### 1. Structure of Embodiment

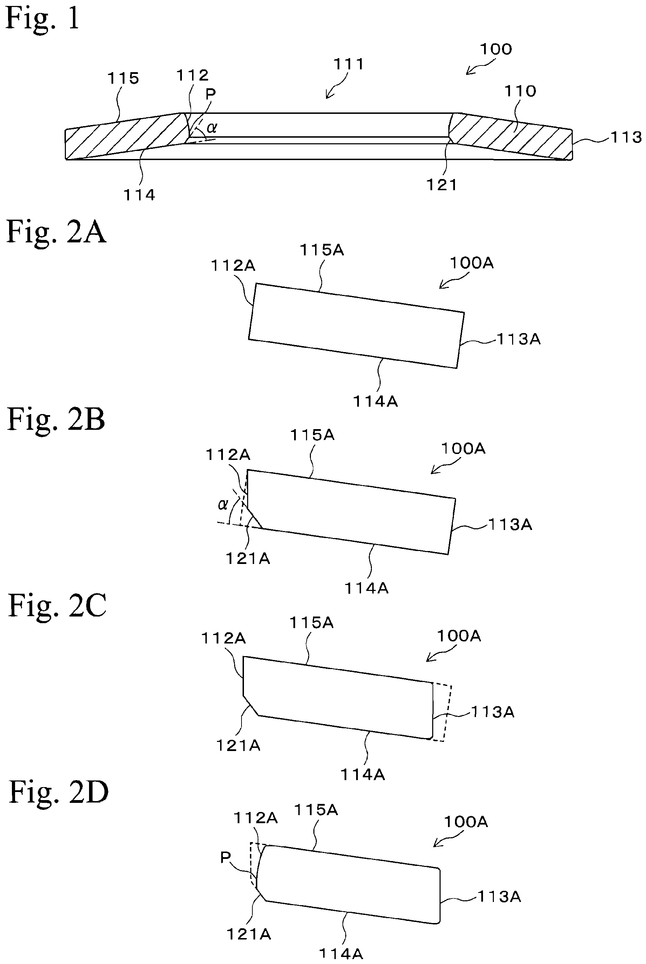

In the following, an embodiment of the present invention will be explained with reference to the figures. Fig. 1 is a cross sectional view in an axial direction showing a structure of a disc spring according to an embodiment of the present invention. The disc spring 100 has a main body 110 having a structure in a disc shape (an approximately conical shape) and having a hole portion 111. The axial direction is a perpendicular direction in the figure.

The inside diameter portion 112 is an inner circumferential surface of the hole 111, and it is a finished surface (a machined surface) in which an effect due to a form, such as roughness generated by shot peening, is removed. It is preferable that the inside diameter portion 112 have a bending surface in which a cross section in an axial direction is an arc shape. The inside diameter portion 112 may have a cylindrical surface in which a cross section in an axial direction is linear. A flat surface which is parallel in a horizontal direction may be formed at an outside diameter portion 113 side edge of the tensile surface 114 and an inside diameter portion 112 side edge of the compressive surface 115. The outside diameter portion 113 is for example, a finished surface (a machined surface) that is parallel in an axial direction.

For example, when the disc spring 100 is used in a machining center, a drawbar passes through the hole 111. The disc spring 100 can be elastically deformed from a disc shape to an approximately flat shape. In such elastic deformation, a concave side of the main body 110 (a lower side of the figure) has a tensile surface 114 in which tensile stress is generated, and a convex side of the main body 110 (an upper side of the figure) has a compressive surface 115 in which compressive stress is generated.

A chamfered portion 121 is formed at the inside diameter portion 112 side edge of the tensile surface 114. The chamfered portion 121 is, for example, a bending surface in which a cross section in an axial direction is an arc shape, or a slope in which an angle for a flat portion of the tensile surface 114 is α. When the chamfered portion 121 is a bending surface, a curvature radius of the bending surface is set to be large, and for example, it is set to be more than a curvature radius of a bending surface of the inside diameter portion 112. It is preferable that an angle α of the slope of the chamfered portion 121 be set to a range of 45 degrees plus-minus 10 degrees (a range from 35 degrees to 55 degrees).

The residual stress due to shot peening is imparted on the tensile surface 114 including the chamfered portion 121 in the main body 111. It is preferable that the compressive surface 115 side edge in the chamfered portion 121 is formed so as to be located toward the tensile surface 114 side from a peak P of the inside diameter portion 112.

Shapes of the inside diameter portion 112, the outside diameter portion 113 and the chamfered portion 121 may be variously deformed within a range of the present invention. The device to which the disc spring 100 is applied is not limited to a machining center, and for example, it can be used in a device having a guide shaft in which the disc spring 100 is guided by passing through the hole 111 of the disc spring 100 or a device having a cylindrical member in which the disc spring 100 is guided by fitting to the outside diameter portion 113 of the disc spring 100.

### 2. Production Method of Embodiment

The production method of the disc spring 100 will be explained by referring to Fig. 2. Figs. 2A to 2D are figures for explaining each step in the production method of the disc spring according to an embodiment of the present invention, and are cross sections in an axial direction showing structures of a right portion of a blank 100A. In Fig. 2, a tensile surface 114A corresponding to the tensile surface 114 of the disc spring 100 is at a concave surface side of the blank 100A (a lower side of the figure), and a compressive surface 115A of the disc spring 100 corresponding to the compressive surface 115 is at a convex surface side of the blank 100A (an upper side of the figure). Broken line parts in the blanks 100A shown in Figs. 2A to 2D denote shapes in the prior steps.

First, a blank in a ring shape is stamped out of, for example, a sheet material, an inside diameter portion and an outside diameter portion of the blank are rough-processed as necessary, and the blank is bent. As a result, a blank 100A in a disc shape is obtained for example, as shown in Fig. 2A. Next, for example, the blank 100A in a disc shape is heat-treated. In the heat treatment, for example, hardening and tempering are carried out.

Then, a chamfer portion 121A is formed at an inside diameter portion 112A side edge of in the tensile surface 114A of the blank 100A for example, as shown Fig. 2B, by chamfering, for example, using a lathe or an NC lathe. The chamfer portion 121A is a slope in which for example, an angle for a flat portion of the tensile surface 114A is α.

Next, an outside diameter portion 113A is processed to a parallel surface in an axial direction by finishing (machining) an outside diameter portion 113A of the blank 100A, for example, using the NC lathe, for example, as shown in Fig. 2C. By processing at the outside diameter portion 113A, the outside diameter portion 113A can be easily chucked in finishing to the following inside diameter portion 112A, and the disc spring 100 can be easily load-calculated. Then, residual stress is imparted over the entirety of the blank 100A by, for example, shot peening the entirety of the blank 100A. In this case, the shot peening may be carried out only at the tensile surface 114A including the chamfer portion 121A in the blank 100A.

Next, the inside diameter portion 112A is formed to be, for example, a bending surface in which a cross section in an axial direction is an arc shape by finishing (machining) the inside diameter portion 112A, for example, using the lathe or the NC lathe, as shown in Fig. 2D. In this case, since at least an outside circumferential edge side of the chamfered portion 121A remains in finishing the inside diameter portion 112A, the remaining chamfered portion 121A constitutes an inside diameter portion 112A side edge of the tensile surface 114A after finishing. Thus, the inside diameter portion 112A side edge of the tensile surface 114A which can generate the maximum stress has the residual stress. Next, a disc spring 100 as shown in Fig. 1 is produced by annealing at a low-temperature, applying grease, combination prestressing, or the like, as necessary.

In this case, an inside diameter of the disc spring 100 is equal to an inside diameter obtained by finishing the inside diameter portion 112A of the blank 100A, since a step for changing an inside diameter in the inside diameter portion 112A is not carried out after finishing the inside diameter portion 112A. Here, the production method of the present embodiment is characterized in that chamfering the inside diameter portion 112A side edge of the tensile surface 114A, shot peening at least the tensile surface 114A, and machining the inside diameter portion 112A are sequentially carried out, and various modifications can be made as long as the characteristics are the same.

In the present embodiment, after the chamfered portion 121A is formed at the inside diameter portion 112A side edge of the tensile surface 114A in the blank 100A, the shot peening is carried out on at least the tensile surface 114A, and therefore, the residual stress is imparted at the chamfered portion 121A of the inside diameter portion 112A side edge on the tensile surface 114A. When finishing is carried out on the inside diameter portion 112A after shot peening, the remained chamfered portion 121A constitutes the inside diameter portion 112A side edge of the tensile surface 114A after the finishing, since at least an outside diameter portion side of the chamfered portion 121A remains. Therefore, the inside diameter portion 112 side edge of the tensile surface 114 in which the maximum stress can be generated in the disc spring 100 can have residual stress, and as a result, an attempt can be made to improve the durability of the disc spring 100.

In addition, an inside diameter of the disc spring 100 can be easily controlled, since the finishing is carried out on the inside diameter portion 112A after the shot peening. In this case, an effect due to a form, such as roughness generated by shot peening, can be removed, and therefore, the roughness of the disc spring 100 of the inside diameter portion 112 can be set to be low, and an attempt can be made to improve precision. After the finishing, a step for changing the inside diameter is not necessary, and consequently, an attempt can be made to further improve the precision of the inside diameter portion 112, and for example, the inside diameter tolerance of the maximum range of about 5 µm can be controlled. Thus, an attempt can be made to improve the precision of the inside diameter portion 112 in the disc spring 100, and when the disc spring 100 is used in a device having a guide shaft and the guide shaft is provided in the hole 111 of the disc spring 100, clearance between the inside diameter portion 112 and the guide shaft can be set to have high precision and the disc spring 100 can be smoothly slid with the guide shaft.

In particular, in the case in which the inside diameter portion 112 is a bending surface in which a cross section in an axial direction is an arc shape, change of an inside diameter of the disc spring 100 when the main body 110 is slid with the guide shaft due to elastic deformation can be suppressed by providing the guide shaft in the hole 111. Additionally, for example, in an aspect in which the compressive surface 115 side edge of the chamfer portion 121 is formed so as to be located toward a tensile surface 114 side from a peak P of the bending surface, the peak P of the bending surface is a point showing an inside diameter of the disc spring 100, and in this case, change of the inside diameter can be effectively suppressed when the main body 110 is slid with the guide shaft by elastic deformation.

## Claims

1. A disc spring (100) comprising a main body (110) in a disc shape having a hole (111),
wherein a chamfered portion (121) is formed at an inside diameter portion (112) side edge of a tensile surface (114) in the main body (110),
residual stress generated by shot peening is applied to the tensile surface (114) and the chamfered portion (121), **characterised in that** an inside diameter portion (112) is a machined surface, remaining at least an outside diameter portion side of the chamfered portion (121), machined after the shot peening, and is a bending surface in which a cross section in an axial direction has an arc shape.

2. The disc spring according to claim 1, wherein a compressive surface (115) side edge of the chamfered portion (121) is formed, so as to be located toward the tensile surface (114) from a peak (P) of the bending surface on a cross section in an axial direction.

3. The disc spring according to claim 1 or 2, wherein the chamfered portion is a bending surface in which a cross section in an axial direction is an arc shape or a slope in which an angle for a flat portion of the tensile surface is a given value.

4. A production method for a disc spring, comprising:
a preparing step in which a blank in a disc shape having a hole is prepared,
a forming step in which a chamfered portion is formed by chamfering at an inside diameter portion side edge of a tensile surface in the blank,
a shot peening step in which at least the tensile surface and the chamfered portion in the blank is shot peened after the chamfering, and
a machining step in which the inside diameter is machined, remaining at least an outside diameter portion side of the chamfered portion, after the shot peening, wherein in the machining step, the inside diameter portion is a bending surface in which a cross section in an axial direction has an arc shape.

5. The production method for a disc spring according to claim 4, wherein in the machining, the bending surface is formed, so that a compressive surface side edge of the chamfered portion is located toward the tensile surface from a peak of the bending surface of the inside diameter portion on a cross section in an axial direction.

## Patentansprüche

1. Tellerfeder (100) enthaltend einen Hauptkörper (110) in einer Tellerform mit einem Loch (111),
wobei ein abgeschrägter Abschnitt (121) an einem inneren Durchmesserabschnitt (112) der Seitenkante einer dehnbaren Fläche (114) im Hauptkörper (110) ausgebildet ist,
wobei die durch Kugelstrahlen erzeugte Eigenspannung auf die dehnbare Fläche (114) und den abgeschrägten Abschnitt (121) aufgebracht wird, **dadurch gekennzeichnet, dass**
ein innerer Durchmesserabschnitt (112) eine bearbeitete Oberfläche ist, wobei mindestens eine äußere Durchmesserabschnittsseite des abgeschrägten Abschnitts (121) verbleibt, die nach dem Kugelstrahlen bearbeitet wird, und die eine Biegefläche ist, in der ein Querschnitt in einer axialen Richtung eine Bogenform aufweist.

2. Tellerfeder nach Anspruch 1, wobei eine Seitenkante der Pressfläche (115) des abgeschrägten Abschnitts (121) so ausgebildet ist, dass diese von einer Spitze (P) der Biegefläche auf einem Querschnitt in einer axialen Richtung zur dehnbaren Fläche (114) hin angeordnet ist.

3. Tellerfeder nach Anspruch 1 oder 2, wobei der abgeschrägte Abschnitt eine Biegefläche ist, in der ein Querschnitt in einer axialen Richtung eine Bogenform oder eine Neigung ist, in der ein Winkel für einen flachen Abschnitt der dehnbaren Fläche ein vorgegebener Wert ist.

4. Herstellungsverfahren für eine Tellerfeder, enthaltend:
einen Vorbereitungsschritt, in dem ein Rohling in einer Tellerform mit einem Loch vorbereitet wird,
einen Umformschritt, in dem ein abgeschrägter Abschnitt durch Abschrägen an einer inneren Durchmesserabschnittsseitenkante einer dehnbaren Fläche im Rohling ausgebildet wird,
einen Kugelstrahlschritt, in dem zumindest die dehnbare Fläche und der abgeschrägte Abschnitt im Rohling nach dem Abschrägen kugelgestrahlt wird, und
einen Bearbeitungsschritt, in dem der innere Durchmesser bearbeitet wird, wobei mindestens eine äußere Durchmesserabschnittsseite des abgeschrägten Abschnitts nach dem Kugelstrahlen verbleibt, wobei im Bearbeitungsschritt der innere Durchmesserabschnitt eine Biegefläche ist, in der ein Querschnitt in einer axialen Richtung eine Bogenform aufweist.

5. Herstellungsverfahren für eine Tellerfeder nach Anspruch 4, wobei beim Bearbeiten die Biegefläche so ausgebildet wird, dass eine Pressflächenseitenkante des abgeschrägten Abschnitts von einer Spitze der Biegefläche des inneren Durchmesserabschnitts auf einem Querschnitt in einer axialen Richtung zur dehnbaren Fläche hin angeordnet wird.

## Revendications

1. Ressort disque (100) comprenant un corps principal (110) en forme de disque ayant un trou (111),
dans lequel une partie chanfreinée (121) est formée au niveau d'un bord latéral de partie de diamètre intérieur (112) d'une surface de traction (114) dans le corps principal (110),
une contrainte résiduelle générée par grenaillage est appliquée à la surface de traction (114) et à la partie chanfreinée (121), **caractérisé en ce que**
une partie de diamètre intérieur (112) est une surface usinée, laissant au moins un côté de la partie de diamètre extérieur de la partie chanfreinée (121), usinée après le grenaillage, et est une surface de flexion dans laquelle une section transversale dans une direction axiale a une forme d'arc.

2. Ressort disque selon la revendication 1, dans lequel un bord latéral de surface de compression (115) de la partie chanfreinée (121) est formé, de façon à être situé vers la surface de traction (114) à partir d'un pic (P) de la surface de flexion sur une section transversale dans une direction axiale.

3. Ressort disque selon la revendication 1 ou 2, dans lequel la partie chanfreinée est une surface de flexion dans laquelle une section transversale dans une direction axiale est une forme d'arc ou une pente dans laquelle un angle pour une partie plate de la surface de traction est une valeur donnée.

4. Procédé de fabrication d'un ressort disque, comprenant :
une étape de préparation dans laquelle une ébauche en forme de disque ayant un trou est préparée,
une étape de formation dans laquelle une partie chanfreinée est formée par chanfreinage au niveau d'un bord latéral de partie de diamètre intérieur d'une surface de traction dans l'ébauche,
une étape de grenaillage dans laquelle au moins la surface de traction et la partie chanfreinée dans l'ébauche subit un grenaillage après le chanfreinage, et
une étape d'usinage dans laquelle le diamètre intérieur est usiné, laissant au moins un côté de la partie de diamètre extérieur de la partie chanfreinée, après le grenaillage, dans lequel dans l'étape d'usinage, la partie de diamètre intérieur est une surface de flexion dans laquelle une section transversale dans une direction axiale a une forme d'arc.

5. Procédé de fabrication d'un ressort disque selon la revendication 4, dans lequel, lors de l'usinage, la surface de flexion est formée, de telle sorte qu'un bord latéral de surface de compression de la partie chanfreinée est situé vers la surface de traction à partir d'un pic de la surface de flexion de la partie de diamètre intérieur sur une section transversale dans une direction axiale.
